# EUROPEAN PATENT APPLICATION

(11) **EP 4 801 077 A1**
(43) Date of publication of application: **02.09.2026**
(21) Application number: 24899719.9
(22) Date of filing: 29.11.2024
(51) Int. Cl.: H04W 4/38

(54) **INFORMATION TRANSMISSION METHODS, RELATED DEVICE AND INFORMATION TRANSMISSION SYSTEM**

(30) Priority: 04.12.2023 CN 202311648869
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: WEI, Anni, Beijing 100032 (CN); LI, Yuan, Beijing 100032 (CN); CAO, Yanyan, Beijing 100032 (CN); MA, Shuai, Beijing 100032 (CN); XIAO, Shanpeng, Beijing 100032 (CN)
(74) Representative: Murgitroyd & Company
(86) International application number: PCT/CN2024/135457
(87) International publication number: WO 2025/119079

(57) **Abstract**

Provided are an information transmission method, a related device, and an information transmission system, which relate to the field of communication technology. The method includes: performing, by an Ambient Internet of Things (A-IoT) management node, transmission of A-IoT-related information through a target network interface; wherein the target network interface includes at least one of a first network interface or a second network interface, the first network interface is an interface between the A-IoT management node and an access network device, and the second network interface is an interface between the A-IoT management node and a target node, and the target node includes an A-IoT server or a network exposure function.

## Description

### CROSS-REFERENCE TO RELATED APPLICATION

This application claims the priority of Chinese Patent Application No. 202311648869.2 filed in China on December 4, 2023, a disclosure of which is incorporated herein by reference in its entirety.

### TECHNICAL FIELD

The present disclosure relates to the field of communication technology, and in particular, to an information transmission method, a related device, and an information transmission system.

### BACKGROUND

The Ambient Internet of Things (A-IoT) utilizes sensors employing passive backscatter technology to convert surrounding available wireless signals into energy for their own operation through an internal wireless acquisition module, while simultaneously implementing information transmission by means of backscatter technology. The backscatter technology modulates data to be sent onto an input radio frequency signal to realize data transmission. Typically, an A-IoT system includes a passive device (e.g., a passive tag), a reader/writer device (e.g., a reader/writer), and an excitation source, wherein the passive device relies on an excitation signal emitted by the excitation source to receive and send information, and the excitation source and the reader/writer device may be separate or integrated. However, in known A-IoT systems, the reader/writer device simultaneously transmits the excitation signal and receives a reflected signal through a dedicated spectrum, resulting in a short communication distance.

### SUMMARY

Embodiments of the present disclosure provide an information transmission method, a related device, and an information transmission system, to solve the problem of a short communication distance in known Ambient Internet of Things (A-IoT) systems.

In a first aspect, an embodiment of the present disclosure provides an information transmission method, including:
performing, by an Ambient Internet of Things (A-IoT) management node, transmission of A-IoT-related information through a target network interface;
wherein the target network interface includes at least one of a first network interface or a second network interface, the first network interface is an interface between the A-IoT management node and an access network device, and the second network interface is an interface between the A-IoT management node and a target node, and the target node includes an A-IoT server or a network exposure function.

In a second aspect, an embodiment of the present disclosure further provides an information transmission method, including:
performing, by an access network device, transmission of Ambient Internet of Things (A-IoT)-related information with an A-IoT management node through a first network interface;
wherein the first network interface is an interface between the A-IoT management node and the access network device.

In a third aspect, an embodiment of the present disclosure further provides an information transmission method, including:
performing, by a target node, transmission of Ambient Internet of Things (A-IoT)-related information with an A-IoT management node through a second network interface;
wherein the second network interface is an interface between the A-IoT management node and the target node, and the target node includes an A-IoT server or a network exposure function.

In a fourth aspect, an embodiment of the present disclosure further provides an A-IoT management node, including:
a first transceiver module, configured to perform transmission of A-IoT-related information through a target network interface;
wherein the target network interface includes at least one of a first network interface or a second network interface, the first network interface is an interface between the A-IoT management node and an access network device, and the second network interface is an interface between the A-IoT management node and a target node, and the target node includes an A-IoT server or a network exposure function.

In a fifth aspect, an embodiment of the present disclosure further provides an access network device, including:
a second transceiver module, configured to perform transmission of Ambient Internet of Things (A-IoT)-related information with an A-IoT management node through a first network interface;
wherein the first network interface is an interface between the A-IoT management node and the access network device.

In a sixth aspect, an embodiment of the present disclosure further provides a target node, including:
a third transceiver module, configured to perform transmission of Ambient Internet of Things (A-IoT)-related information with an A-IoT management node through a second network interface;
wherein the second network interface is an interface between the A-IoT management node and the target node, and the target node includes an A-IoT server or a network exposure function.

In a seventh aspect, an embodiment of the present disclosure further provides an information transmission system, including a passive device, an access network device, an A-IoT management node, a target node, and a target network interface;
wherein the target network interface includes at least one of a first network interface or a second network interface, the first network interface is an interface between the A-IoT management node and the access network device, and the second network interface is an interface between the A-IoT management node and the target node, and the target node includes an A-IoT server or a network exposure function.

In an eighth aspect, an embodiment of the present disclosure further provides a communication device, including: a memory, a processor, and a computer program stored in the memory and executable on the processor, wherein the processor, when executing the computer program, implements the steps of the method provided in the first aspect as described above, or implements the steps of the method provided in the second aspect as described above, or implements the steps of the method provided in the third aspect as described above.

In a ninth aspect, an embodiment of the present disclosure further provides a computer-readable storage medium, wherein a computer program is stored on the computer-readable storage medium, and the computer program, when executed by a processor, implements the steps of the method provided in the first aspect as described above, or implements the steps of the method provided in the second aspect as described above, or implements the steps of the method provided in the third aspect as described above.

In the embodiments of the present disclosure, the A-IoT management node performs transmission of A-IoT-related information through the target network interface; wherein the target network interface includes at least one of the first network interface or the second network interface, the first network interface is an interface between the A-IoT management node and the access network device, and the second network interface is an interface between the A-IoT management node and the target node, and the target node includes an A-IoT server or a network exposure function, that is, the A-IoT management node can perform transmission of A-IoT-related information with the access network device through the first network interface, and/or the A-IoT management node can perform transmission of A-IoT-related information with the target node through the second network interface, so that transmission of A-IoT related information can be realized through a cellular network, which is beneficial to improving the communication distance of the A-IoT system; in addition, since the transmission of the A-IoT-related information is directly performed through the interface between the A-IoT management node and the access network device and/or the interface between the A-IoT management node and the target node, the process of transmitting the A-IoT-related information in the cellular network can be simplified, and the transmission efficiency of the A-IoT-related information can be improved.

### BRIEF DESCRIPTION OF THE DRAWINGS

In order to more clearly illustrate the technical solutions of the embodiments of the present disclosure, the accompanying drawings required for describing the embodiments of the present disclosure will be briefly introduced below. Apparently, the accompanying drawings in the following description are merely some embodiments of the present disclosure, and for those of ordinary skill in the art, other drawings can also be obtained based on these drawings without making creative effort.
FIG. 1 is a schematic diagram of an RFID system provided by related art;
FIG. 2 is a flowchart of tag inventory and read/write process provided by related art;
FIG. 3 is a schematic diagram of a 5G system architecture provided by related art;
FIG. 4 is a flowchart of an information transmission method provided by an embodiment of the present disclosure;
FIG. 5 is a schematic diagram of an information transmission system provided by an embodiment of the present disclosure;
FIG. 6a is a schematic diagram of a protocol stack between a tag and an A-IoT server provided by an embodiment of the present disclosure;
FIG. 6b is a schematic diagram of a protocol stack between a tag and a Network Exposure Function (NEF) provided by an embodiment of the present disclosure;
FIG. 7 is a schematic diagram of a GTP message header provided by an embodiment of the present disclosure;
FIG. 8 is a flowchart of an information transmission method provided by another embodiment of the present disclosure;
FIG. 9 is a flowchart of an information transmission method provided by yet another embodiment of the present disclosure;
FIG. 10 is a flowchart of passive device registration provided by an embodiment of the present disclosure;
FIG. 11 is a flowchart of passive service processing provided by an embodiment of the present disclosure;
FIG. 12 is a first structural diagram of an A-IoT management node provided by an embodiment of the present disclosure;
FIG. 13 is a first structural diagram of an access network device provided by an embodiment of the present disclosure;
FIG. 14 is a first structural diagram of a target node provided by an embodiment of the present disclosure;
FIG. 15 is a second structural diagram of an A-IoT management node provided by an embodiment of the present disclosure;
FIG. 16 is a second structural diagram of an access network device provided by an embodiment of the present disclosure;
FIG. 17 is a second structural diagram of a target node provided by an embodiment of the present disclosure.

### DETAILED DESCRIPTION

The technical solutions in the embodiments of the present disclosure will be clearly and completely described below in conjunction with the accompanying drawings in the embodiments of the present disclosure. Apparently, the described embodiments are a part of the embodiments of the present disclosure, rather than all of the embodiments. Based on the embodiments of the present disclosure, all other embodiments obtained by those of ordinary skill in the art without making creative efforts shall fall within the protection scope of the present disclosure.

To make the embodiments of the present disclosure clearer, the relevant technical knowledge involved in the embodiments of the present disclosure is first introduced as follows.

### I. Passive Technology

### 1. Development Background of Passive Technology

The Internet of Things (IoT) has developed rapidly driven by the Internet and radio frequency identification technology, and has been widely applied, for example, in smart cities, smart homes, autonomous driving, and unmanned aerial vehicles. The IoT adheres to the concept that everything can be connected to the network, with the ultimate goal of realizing interconnection of all things. With the rapid development of IoT devices, the drawbacks of current sensors have gradually emerged. On the one hand, sensors are generally powered by their own batteries, and the battery capacity is limited, which results in frequent battery replacement to ensure normal operation of the sensors. However, in some special scenarios, for example, sensor nodes need to be installed (inside walls or inside household appliances) or deployed in remote areas or even dangerous areas, making power replacement of the sensor nodes extremely difficult. On the other hand, with the increase in market demand, the design and manufacturing costs of sensors have also risen significantly, which further leads to high maintenance costs. These two disadvantages have become obstacles to the widespread adoption and large-scale deployment of the IoT. The emergence of passive sensors based on backscatter technology has brought new opportunities to the IoT and has also introduced a new concept, namely, the A-IoT.

A significant feature of the A-IoT is that sensors utilizing passive backscatter technology convert surrounding available wireless signals into energy for their own operation through an internal wireless acquisition module, while simultaneously implementing information transmission of a target node by means of backscatter technology. The backscatter technology modulates the data to be sent onto the input radio frequency signal to realize data transmission. Over the past two decades, backscatter technology based on point-to-point communication has been widely applied in the A-IoT, for example, high-frequency-based access control, bank cards, etc. However, the objective of the IoT is to achieve the interconnection of all things and to realize multiple functions, which requires the IoT to have larger communication capacity, faster communication rates, longer communication ranges, and more extensive equipment (miniaturization). Ultra-high-frequency-based Radio Frequency Identification (RFID) technology greatly expands the practicality of conventional backscatter communication, for example, achieving a communication distance on the order of 10 meters, a transmission rate of 100 kbit/s, a node density of 100 per square meter, and a cost of 0.1 yuan.

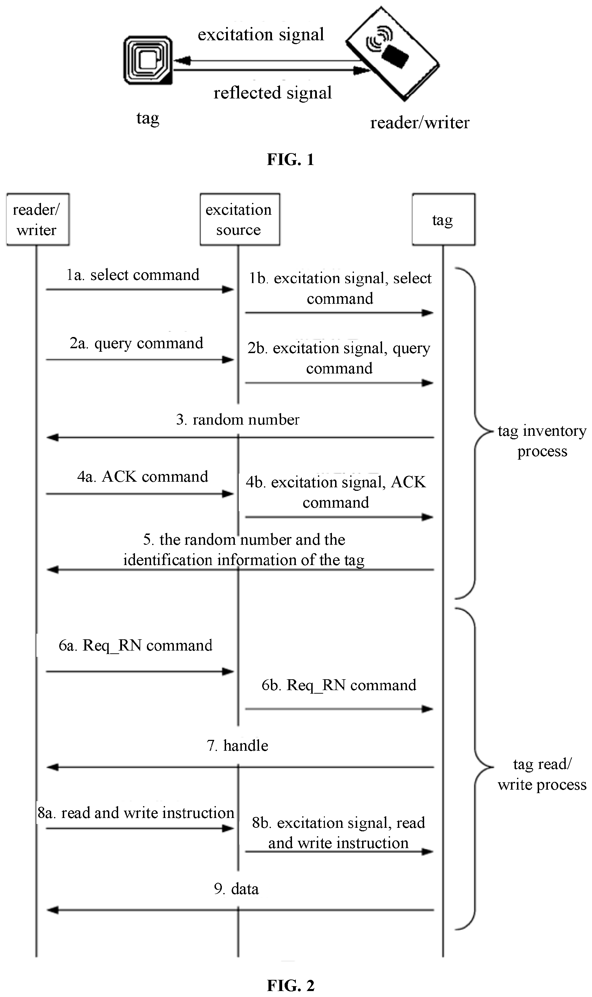

A conventional RFID system may be as shown in FIG. 1, and its basic working process is as follows. A reader sends a radio frequency excitation signal to activate a passive electronic tag, the electronic tag modulates its own information onto the radio frequency signal by using backscatter communication technology, and the reader receives and demodulates a reflected signal from the electronic tag, thereby realizing information transmission between the reader and the electronic tag. In a scenario of a separated architecture of a passive system, the excitation signal may be sent by an exciter.

### 2. Tag Inventory and Read/Write Process

A passive tag inventory process can determine which tags are currently located within a service coverage range of a reader/writer. As shown in FIG. 2, the tag inventory process may include, but is not limited to, the following steps.

Step 1a: the reader/writer receives an inventory command from an A-IoT server, generates a Select command, and sends the Select command to an excitation source, wherein the Select command carries identification information of tags to be inventoried.

It should be noted that the inventory command may be delivered by the A-IoT server to middleware, and then delivered by the middleware to the reader/writer.

Step 1b: after receiving the Select command, the excitation source sends an excitation signal to tags, and sends the Select command to the tags.

It should be noted that, in the embodiments of the present disclosure, unless otherwise specified, before sending information to tags, the excitation source needs to first send an excitation signal to the tags, so that the tags can receive and send information based on the received excitation signal.

Step 2a: the reader/writer sends a Query command to the excitation source.

Step 2b: after receiving the Query command, the excitation source sends an excitation signal to the tags, and sends the Query command to the tags.

Step 3: after monitoring the Select command, the tag determines whether the tag belongs to the tags to be inventoried (e.g., determining whether identification information of the tag is included in the identification information of the tags to be inventoried carried in the Select command); if yes, after subsequently monitoring the Query command, the tag feeds back a random number (e.g., RN16) to the reader/writer, for example, feeding back the random number RN16 to the reader/writer in a contention manner; if not, the tag may perform no subsequent action.

Step 4a: after receiving the random number, the reader/writer sends an ACK command to the excitation source, wherein the ACK command carries the random number.

Step 4b: the excitation source sends an excitation signal to the tags, and forwards the ACK command to the tags.

Step 5: after receiving the ACK command, the tag verifies whether the random number in the ACK command is the same as the random number fed back by the tag itself; if yes, the tag sends its tag information and the random number to the reader/writer. After receiving the random number and the identification information of the tag, the reader/writer determines that the tag is within the coverage range of the reader/writer, and the inventory process is completed.

Next, a tag read/write process is introduced. The tag read/write process may perform a write operation or a read operation on a tag. If it is a write operation, data is written into a storage area of the tag; if it is a read operation, data in the storage area of the tag is read. It should be noted that the tag needs to be inventoried first, and after a handle is obtained, a read or write operation is performed on the tag. As shown in FIG. 2, the tag read/write process may include, but is not limited to, the following steps.

Step 6a: the reader/writer sends a Req_RN command to the excitation source, wherein the Req_RN command carries the random number RN16 previously received by the reader/writer, and the Req_RN command carrying the random number RN16 indicates that a read or write operation is to be performed on the tag that has sent the random number RN16.

Step 6b: after receiving the Req_RN command, the excitation source sends an excitation signal to the tags, and sends the Req_RN command to the tags.

Step 7: after receiving the Req_RN command, the tag verifies whether the random number in the Req_RN command is the same as the random number fed back by the tag itself; if yes, it indicates that the reader/writer needs to perform a read or write operation on the tag, and the tag sends a handle to the reader/writer. The handle may be used to establish an association between the tag and the excitation source, and a specific form of the handle may be a random number, an object, or a pointer.

Step 8a: the reader/writer sends a read command or a write command to the excitation source, wherein the read command or the write command carries the handle fed back by the tag; if it is a write command, the command further carries data to be written into the storage area of the tag.

Step 8b: after receiving the read command or the write command, the excitation source sends an excitation signal to the tags, and sends the read command or the write command to the tags.

Step 9: if the commands in Step 8a and Step 8b are read commands, the tag sends data in its storage area to the reader/writer and carries the handle. It should be noted that, in FIG. 2, performing inventory and read/write operations on the tag is merely an example; in other implementations, only inventory may be performed on the tag without performing read/write operations.

### II. 5th-Generation (5G) Architecture

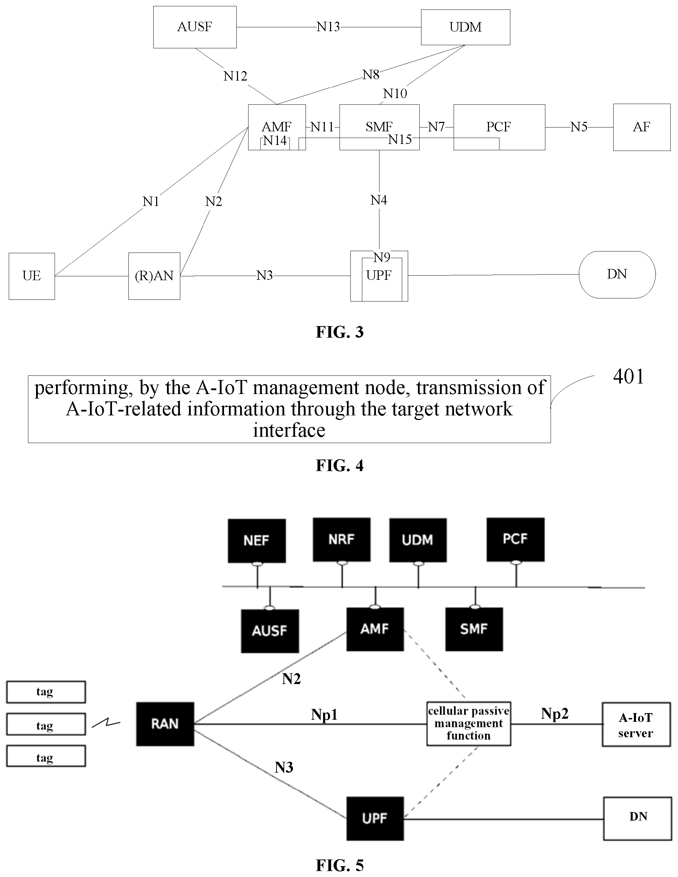

FIG. 3 is a schematic diagram of a 5G system architecture, and the meanings of the various nodes shown in the figure are as follows:
UE: User Equipment, 5G terminal device;
(R)AN: Access Network device;
UPF: User Plane Function;
The 5G control plane adopts a service-based architecture, and the control plane network elements include AUSF, AMF, SMF, NSSF, NEF, NRF, PCF, UDM, and AF;
AMF: Mobility Management Function;
SMF: Session Management Function;
PCF: Policy Control Function;
UDM: Unified Data Management, which completes functions such as user subscription data management, authentication information generation, mobility management, and short message routing;
AUSF: Authentication Server Function, which provides authentication-related functions;
NSSF: The Network Slice Selection Function;
NEF: Network Exposure Function;
NRF: NF Repository Function;
AF: Application Function.

FIG. 3 is a schematic diagram of a 5G system architecture, which includes a terminal device, an access network (AN) device, a core network element, and a data network (DN). The terminal device may be referred to as a user equipment (UE), an access terminal, a user unit, a user station, a mobile station (MS), a mobile terminal (MT), a remote station, a remote terminal, mobile device, a user terminal, a terminal, a wireless communication device, a user agent, or a user apparatus. The terminal device may be a device that provides voice/data connectivity to a user, for example, a handheld device with a wireless connection function, a vehicle-mounted device, etc. At present, some examples of the terminals may include: a mobile phone, a tablet computer (Pad), a computer with a wireless transceiver function (e.g., a laptop computer or a handheld computer), a mobile internet device (MID), a virtual reality (VR) device, an augmented reality (AR) device, a wireless terminal in industrial control, a wireless terminal in self-driving, a wireless terminal in remote medical, a wireless terminal in a smart grid, a wireless terminal in transportation safety, a wireless terminal in a smart city, a wireless terminal in a smart home, a cellular phone, a cordless phone, a Session Initiation Protocol (SIP) phone, a Wireless Local Loop (WLL) station, a Personal Digital Assistant (PDA), a handheld device with a wireless communication function, a computing device or other processing device connected to a wireless modem, a vehicle-mounted device, a wearable device, a terminal device in a 5G network, or a terminal device in a future-evolved Public Land Mobile Network (PLMN). In addition, the terminal device may further be a terminal device in an Internet of Things (IoT) system. IoT is an important component of the future development of information technology. A main technical feature thereof is that objects are connected to a network through communication technologies, thereby forming an intelligent network for human-to-machine and machine-to-machine interconnection. IoT technology can, for example, achieve massive connections, deep coverage, and low power consumption of terminal devices through Narrow Band (NB) technology. Furthermore, the terminal devices may also include sensors such as smart printers, train detectors, and gas station sensors. Main functions thereof include collecting data (for some terminal devices), receiving control information and downlink data from a network device, and sending electromagnetic waves to transmit uplink data to the network device. It should be understood that the terminal device may be any device capable of accessing a network. The terminal device and the access network device may communicate with each other using a certain air interface technology. Optionally, the UE may be used to act as a base station. For example, the UE may act as a scheduling entity to provide sidelink signals among UEs in Vehicle-to-Everything (V2X) or Device-to-Device (D2D) scenarios. For example, a cellular phone and a vehicle may communicate with each other using sidelink signals. A cellular phone may communicate with a smart home device without relaying communication signals through a base station. The core network is responsible for maintaining subscription data of a mobile network and providing functions such as session management, mobility management, policy management, and security authentication for the UE.

The core network may include, but is not limited to, the following core network elements: an Access and Mobility Management Function (AMF), an Authentication Server Function (AUSF), Unified Data Management (UDM), a Session Management Function (SMF), and a User Plane Function (UPF).

The AMF network element is a termination point of Non-access Stratum (NAS) signaling and is mainly responsible for user access authentication and mobility management. The terminal device and the AMF may communicate through N1 NAS messages, and communication messages between the terminal device and the AMF may also be relayed through N2 messages of the RAN. The RAN and the AMF communicate through N2 messages.

The AUSF network element has an authentication service function and is configured to process authentication requests for both Third Generation Partnership Project (3GPP) access and non-3GPP access.

The UDM network element is configured to manage user subscription information and complete user authentication and authorization.

The SMF network element is responsible for session management, including establishment and release of user sessions, and maintenance of Protocol Data Unit (PDU) session context and user plane forwarding tunnel information

The UPF network element is configured to process user data packets, for example, forwarding and charging.

The DN is configured to provide service for the terminal device, and may be a private network, such as a local area network; or an external network not controlled by an operator, such as the Internet; or a dedicated network jointly deployed by operators, such as a network providing an IP Multimedia Subsystem (IMS).

In addition, the core network may further include an Application Function (AF), an NF Repository Function (NRF), a Network Slice Selection Function (NSSF), and the like.

The terminal device may access the DN through an established PDU session. The schematic diagram of the network architecture shown in FIG. 3 further includes interfaces between the network elements. For example, N2 represents an interface between the AMF network element and the RAN device. In a future communication system such as a 6G communication system, the above network elements or devices may still use the names in a 4G or 5G communication system, or may use other names. The functions of the above network elements or devices may be implemented by a single independent network element or jointly implemented by a plurality of network elements. In practical deployment, the core network elements may be integrated. For example, a mobility management network element may be integrated with a session management network element; a session management network element may be integrated with a user plane network element; and a network slice selection function network element, a policy control network element, and a unified data management network element may be integrated.

It should also be noted that, for practical deployment scenarios, conventional RFID technologies face the following challenges. 1. Limited communication distance and significant interference. Conventional ultra-high frequency RFID reader/writers adopt an integrated fullduplex transceiver architecture, simultaneously transmitting excitation signals and receiving reflected signals, which results in strong system self-interference and inter-system interference. In addition, due to the relatively low reception sensitivity of tags and transmission power limitations in RFID frequency bands, the coverage of conventional RFID technologies is limited, with communication distances of less than 10 m, and less than 3 m after integrating sensors. 2. Inability to form continuous networking, and high deployment and manual operation and maintenance costs. Conventional commercial RFID reader/writers suffer from severe self-interference and mutual interference, and limited communication distance. They can only rely on manual handheld operation or gate-based deployment to inventory tags, making it difficult to form a continuously covered local area network or wide area network with automated inventory function, resulting in high deployment, operation, and maintenance costs and low efficiency. 3. No support for positioning. Conventional RFID does not support positioning or large-scale networking, and mainly relies on handheld reader/writers or gate-based deployments to inventory tags for inbound and outbound management, making it difficult to achieve automatic position tracking and positioning of tags.

In view of the above challenges faced by conventional RFID, a novel A-IoT is constructed through cellular A-IoT technology. Without significantly increasing the cost, power consumption, complexity, or size of tags, known cellular network infrastructure and network scale are reused to increase communication distance, reduce interference among reader/writers, achieve low-cost large-scale networking, and support positioning of tags.

In addition, in known cellular networks, the registration, authentication, and verification processes for terminal devices generally require initiating a session connection, and service transmission is performed based on the session connection. The process is relatively complex and is not suitable for the management of massive passive tags and passive service transmission. At present, research on the integration of A-IoT and cellular networks is still at the requirement study stage, and there is no standardized or commercial cellular passive architecture or service processing procedure, nor are there system architecture designs corresponding to different deployment scenarios. Different from wide-area scenarios, for localized deployment scenarios, such as inventory and management of identified objects within a fixed area, a lightweight cellular passive network architecture is required to simplify device registration and authentication procedures and service processing procedures. Based on this, embodiments of the present disclosure propose a system architecture for integrating A-IoT technology with a cellular system. In this architecture, a new cellular passive management function, as well as an Np1 interface and an Np2 interface, are introduced, and service processing procedures for cellular passive device registration and services are proposed based on this architecture.

The information transmission method provided in embodiments of the present disclosure will be described in detail below with reference to the accompanying drawings through specific embodiments and application scenarios.

Referring to FIG. 4, FIG. 4 is a flowchart of an information transmission method provided by an embodiment of the present disclosure. As shown in FIG. 4, the method includes the following step.

Step 401, performing, by the A-IoT management node, transmission of A-IoT-related information through the target network interface;
wherein the target network interface includes at least one of a first network interface or a second network interface, the first network interface is an interface between the A-IoT management node and an access network device, and the second network interface is an interface between the A-IoT management node and a target node, and the target node includes an A-IoT server or a network exposure function.

In this embodiment, the A-IoT management node is used for passive device management (e.g., registration, authentication, capability activation, and management of passive devices) and passive service management (e.g., access permission management of passive services, passive service command processing, active periodic inventory, etc.), wherein the passive device may also be referred to as a response device, for example, a passive tag (Tag).

The A-IoT management node may be a separately deployed network node. For example, the A-IoT management node may be a separately deployed cellular passive management function. Alternatively, the A-IoT management node may be a network node integrated with other nodes. For example, the cellular passive management function may be integrated with a network exposure function (NEF) element, or integrated with an AMF network element, or integrated with a UPF network element, or integrated with an access network device. It should be noted that when two network elements are integrated, the interaction between the two network elements provided in the embodiments of the present disclosure becomes an internal operation of the integrated network element or may be omitted. When the cellular passive management function is integrated with the access network device, the first network interface may be an internal interface of the network element.

The first network interface is an interface between the A-IoT management node and the access network device, and is used for transmission of A-IoT-related information between the A-IoT management node and the access network device. It can be understood that, when the access network device receives A-IoT-related information sent by the A-IoT management node through the first network interface, the access network device may send the A-IoT-related information to the passive device; and when the access network device receives A-IoT-related information sent by the passive device, the access network device may send the A-IoT-related information to the A-IoT management node through the first network interface. In some examples, the first network interface may also be referred to as an Np1 interface. The access network device may serve as a reader/writer device, and in some optional embodiments, may further serve as an excitation source.

The application layer protocol of the first network interface may use a known protocol, for example, General Packet Radio Service Tunneling Protocol (GTP), Next Generation Application Protocol (NG-AP), Low Level Reader Protocol (LLRP), Hyper Text Transfer Protocol (HTTP), Message Queuing Telemetry Transport (MQTT), etc.; or, a newly defined protocol may also be used, which is not limited in this embodiment.

The transport layer protocol of the first network interface may use a known protocol, for example, Stream Control Transmission Protocol (SCTP), Transmission Control Protocol (TCP), User Datagram Protocol (UDP), etc.; or, a newly defined protocol may also be used, which is not limited in this embodiment.

The second network interface is an interface between the A-IoT management node and the target node, and is used for transmission of A-IoT-related information between the A-IoT management node and the target node. In some examples, the second network interface may also be referred to as an Np2 interface.

The application layer protocol of the second network interface may use a known protocol, for example, Application Level Event (ALE), HTTP, MQTT, etc.; or, a newly defined protocol may also be used, which is not limited in this embodiment.

The transport layer protocol of the second network interface may use a known protocol, for example, TCP, UDP, etc.; or, a newly defined protocol may also be used, which is not limited in this embodiment.

It should be noted that when the target node is a network exposure function, the network exposure function is configured to forward the A-IoT-related information between the A-IoT management node and the A-IoT server. That is, the network exposure function forwards the A-IoT-related information received from the A-IoT server to the A-IoT management node through the second network interface, and forwards the A-IoT-related information received from the A-IoT management node through the second network interface to the A-IoT server. The A-IoT server may also be referred to as a passive service platform or a passive service server, etc.

The A-IoT-related information may include but is not limited to passive device management-related information (e.g., a network registration request message of a passive device, a network registration response message, passive device authentication and authorization-related information, etc.), passive service-related information (e.g., a passive service instruction, a passive service response, etc.), and the like.

Exemplarily, embodiments of the present disclosure may be applied to an information transmission system as shown in FIG. 5, wherein the information transmission system may also be referred to as a cellular passive network system. On a network side of the information transmission system, in addition to devices of a known cellular network, such as a RAN, a UPF, an AMF, and a NEF, a cellular passive management function, an Np1 interface, and an Np2 interface are further included. The RAN and the cellular passive management function transmit A-IoT-related information through the Np1 interface, and the cellular passive management function and a passive service server transmit A-IoT-related information through the Np2 interface. Each tag no longer receives downlink A-IoT-related information through a dedicated spectrum, but receives downlink A-IoT-related information from the RAN through an air interface (e.g., a cellular air interface); correspondingly, uplink A-IoT-related information sent by the tags is sent to the RAN through an air interface (e.g., an A-IoT air interface).

In the embodiments of the present disclosure, the A-IoT management node performs transmission of A-IoT-related information through the target network interface; wherein the target network interface includes at least one of the first network interface or the second network interface, the first network interface is an interface between the A-IoT management node and the access network device, and the second network interface is an interface between the A-IoT management node and the target node, and the target node includes an A-IoT server or a network exposure function, that is, the A-IoT management node can perform transmission of A-IoT-related information with the access network device through the first network interface, and/or the A-IoT management node can perform transmission of A-IoT-related information with the target node through the second network interface, so that transmission of A-IoT related information can be realized through a cellular network, which is beneficial to improving the communication distance of the A-IoT system; in addition, since the transmission of the A-IoT-related information is directly performed through the interface between the A-IoT management node and the access network device and/or the interface between the A-IoT management node and the target node, the transmission process of the A-IoT-related information in the cellular network can be simplified, and the transmission efficiency of the A-IoT-related information can be improved.

Optionally, an application layer protocol of the first network interface includes one of the following: a General Packet Radio Service Tunneling Protocol (GTP), a Next Generation Application Protocol (NG-AP), a Low Level Reader Protocol (LLRP), a Hypertext Transfer Protocol (HTTP), or a Message Queuing Telemetry Transport (MQTT) protocol;
and/or
a transport layer protocol of the first network interface includes one of the following: a Stream Control Transmission Protocol (SCTP), a Transmission Control Protocol (TCP), or a User Datagram Protocol (UDP).

In this embodiment, at least one of the application layer protocol and the transport layer protocol of the first network interface is implemented using a known protocol, which can reduce the difficulty of designing the first network interface while ensuring rapid transmission of A-IoT-related information between the A-IoT management node and the access network device.

Optionally, an application layer protocol of the second network interface includes one of the following: an Application Level Event (ALE) protocol, a Hypertext Transfer Protocol (HTTP), or a Message Queuing Telemetry Transport (MQTT) protocol;
and/or
a transport layer protocol of the second network interface includes one of the following: a Transmission Control Protocol (TCP) or a User Datagram Protocol (UDP).

In this embodiment, at least one of the application layer protocol and the transport layer protocol of the second network interface is implemented using a known protocol, which can reduce the difficulty of designing the second network interface while ensuring rapid transmission of A-IoT-related information between the A-IoT management node and the target node.

In some examples, the application layer protocol of the first network interface can also be referred to as a Passive Internet of Things Management (PIoT-M) protocol. The application layer protocol of the second network interface can also be referred to as a Passive IoT-Application (PIoT-App) protocol.

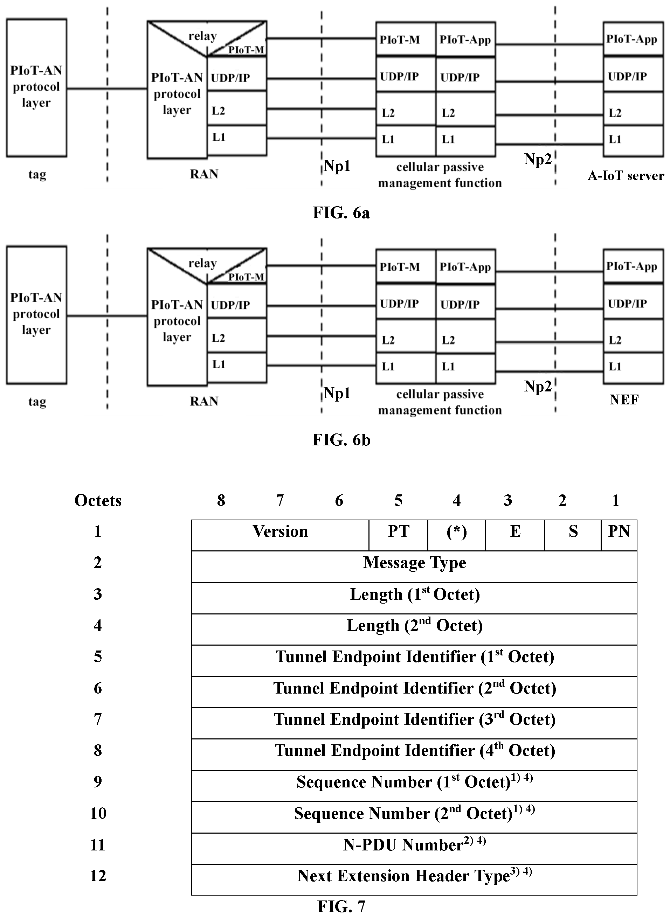

Exemplarily, taking the information transmission system shown in FIG. 5 as an example, when the A-IoT server communicates directly with the cellular passive management function, the protocol stack between the tag and the A-IoT server can be as shown in FIG. 6a. When the A-IoT server communicates with the cellular passive management function through a network exposure function, the protocol stack between the tag and the network exposure function can be as shown in FIG. 6b.

Optionally, the target network interface includes the first network interface; the A-IoT-related information includes a network registration request message and a network registration response message;
the performing, by the A-IoT management node, the transmission of the A-IoT-related information through the target network interface includes:
receiving, by the A-IoT management node through the first network interface, the network registration request message sent by the access network device, wherein the network registration request message is used to request network registration for a passive device, and the network registration request message includes at least one of information of the passive device or passive service-related capability information of the access network device;
sending, by the A-IoT management node through the first network interface, the network registration response message to the access network device.

In this embodiment, the network registration request message can be used to request network registration for one or more passive devices, and the network registration request message can include at least one of the information of the passive device or the passive service-related capability information of the access network device. The information of the passive device can include an identifier of the passive device, a type of the passive device, and the like. The passive service-related capability information of the access network device is used to indicate the passive service-related capability of the access network device. For example, the passive service-related capability information can include indication information indicating whether the access network device has a passive service reader/writer function, a service coverage range of the access network device as a reader/writer device, and the like. It can be understood that when the network registration request message is used to request network registration for multiple passive devices, the network registration request message can include information of multiple passive devices, for example, identifiers of multiple passive devices.

The following illustrates the transmission of the network registration request message through the first network interface using different application layer protocols.
1. When the PIoT-M protocol is an HTTP 2.0, an implementation example of the HTTP message can be as follows:

   ```
"HEADERS
- END_STREAM
- END_HEADERS
:method = POST
:path = /resource
:scheme = https
CONTINUATION
+ END_HEADERS
content-type = txt
host = example.org (domain name/IP of the cellular passive management function)
content-length = xxx (message content length)
DATA
+ END_STREAM
{binary data
(
tag information (e.g., tag type, tag ID, etc.);
RAN passive service support capability information, etc.)}"
```
2. When the PIoT-M protocol is GTP, an implementation example of the GTP message header is shown in FIG. 7, wherein the mandatory fields in the GTP message header are as follows:
   Version: used to determine the version of the GTP, represented in decimal;
   Protocol Type (PT): used to distinguish between GTP (set to '1') and GTP' (set to '0');
   Extension Header Flag (E): '1' indicates that a next extension header field is present, and '0' indicates that no next extension header field is present, or that one is present but need not be interpreted;
   Sequence Number Flag (S): '1' indicates that a sequence number field is present, and '0' indicates that either no sequence number field is present or one is present but need not be interpreted. In GTP-C messages, the S flag should be set to '1';
   N-PDU Number Flag (PN): '1' indicates that an N-PDU number field is present, and '0' indicates that either no N-PDU number field is present or one is present but need not be interpreted. This flag is only meaningful for GTP-U; therefore, GTP-C does not use this flag;
   Message Type: this field indicates the type of the GTP message;
   Length: this field indicates the payload length in bytes, that is, the length of the remaining part of the packet excluding the mandatory portion of the GTP header (i.e., excluding the first 8 bytes);
   Tunnel Endpoint Identifier (TEID): this field clearly identifies a tunnel endpoint in a peer GTP-U or GTP-C protocol entity.

The optional fields in the GTP message header are as follows:
Sequence Number: this field is optional in GTP-U. For GTP-C control plane messages, the sequence number is used for transaction identification. When transmitted through a GTP-U tunnel, if transmission order needs to be protected, this field is used to number T-PDUs, and the sequence number value is incremented for each transmitted T-PDU;
N-PDU Number: this field is used during routing area update procedures between SGSNs and in certain inter-system handover procedures (e.g., handover between 2G and 3G radio access networks). When communication between an MS and a Serving GPRS Support Node (SGSN) operates in acknowledged mode, this field is used to coordinate data transmission therebetween. The exact meaning of this field depends on the application scenario. For example, in Global System for Mobile Communications (GSM)/GPRS to GSM/GPRS, this field corresponds to a Subnetwork Dependent Convergence Protocol (SNDCP) N-PDU number;
Next Extension Header Type: this field defines the type of the extension header immediately following this field in a G-PDU.

Optionally, when the application layer protocol of the first network interface is GTP, the network registration request message is carried in a GTP message, and a message type or a next extension header type of the GTP message includes a first message type, wherein the first message type is used to indicate that the GTP message is a network registration request message of a passive device.

Exemplarily, when the PIoT-M protocol is GTP, a message type may be added to the "Message Type" field or the "Next Extension Header Type" field of the GTP message to indicate that the message is a network registration request message of a passive device sent by an access network device to a cellular passive management function. The message body of the GTP message may carry information of the passive device (e.g. a tag type, a tag ID, etc.) and passive service capability information of the RAN. A tunnel identifier of the cellular passive management function may be preconfigured in the RAN, or may be sent to the RAN through other core network elements such as an AMF, an SMF, a PCF, or a UDM, etc.

The network registration response message may be used to indicate success or failure of network registration. In some optional embodiments, the network registration response message may include indication information of a state of the passive device.

It should be noted that the network registration request message may also be referred to as a registration request message or an activation request message, and correspondingly, the network registration response message may also be referred to as a registration response message or an activation response message, which is not limited in this embodiment.

In this embodiment, the A-IoT management node receives, through the first network interface, the network registration request message sent by the access network device, wherein the network registration request message is used to request network registration for a passive device, and the network registration request message includes at least one of the information of the passive device or the passive service-related capability information of the access network device; and sends, through the first network interface, a network registration response message to the access network device to achieve network registration for the passive device. Since the information related to the passive device network registration is directly transmitted between the A-IoT management node and the access network device through the first network interface, compared with forwarding the information related to the passive device network registration through network elements such as AMF or UPF, the passive device network registration process can be simplified and the efficiency of the passive device network registration process can be improved.

In some optional embodiments, the access network device can send the network registration request message to the A-IoT management node through the AMF network element. Exemplarily, the network registration request message can be carried in a NAS message sent by the RAN to the cellular network, i.e., a NAS registration request message, and sent to the AMF network element through an AN message of the access network device, and then sent by the AMF network element to the cellular passive management function. In this step, the intermediate device (e.g., a relay device or a terminal) sends an AN message to the access network device, and the AN message may include one or more of a NAS registration request message, a passive tag registration indication information, a tag identifier, a tag type, a mobility characteristic of the tag, or a RAN identifier. One or more of the passive tag registration indication information, the tag identification information, the tag type, the mobility characteristic of the tag, or the RAN identifier can also be carried in the NAS registration request message at the same time. Meanwhile, the NAS registration request message may also carry an A-IoT server identifier (including a Fully Qualified Domain Name (FQDN), an IP address, a tunnel ID, etc.) information.

In some optional embodiments, the access network device can determine, according to current application scenarios or service requirements, whether to send the network registration request message to the A-IoT management node through the first network interface or to send the network registration request message to the A-IoT management node through the AMF network element.

Optionally, the information of the passive device includes at least one of the following: an identifier of the passive device, a type of the passive device, or a mobility characteristic of the passive device;
and/or
the passive service-related capability information of the access network device includes at least one of the following: indication information indicating whether the access network device has a passive service reader/writer function, information of the passive device served by the access network device as a reader/writer device, or a service coverage range of the access network device as a reader/writer device.

In this embodiment, the identifier of the passive device may include but is not limited to at least one of a temporary identifier, a permanent identifier, a globally unique identifier, etc. The type of the passive device may include at least one of a manufacturer, a commodity type, a mobility type, etc. The mobility characteristic of the passive device is used to reflect the mobility situation of the passive device, for example, high mobility, low mobility, fixed position, etc.

Whether the access network device has a passive service reader/writer function can be understood as whether the access network device can serve as a reader/writer device. The information of the passive device served by the access network device as a reader/writer device may include, for example, at least one of the type of the passive device served, the identifier of the passive device served, or the range of the passive device served. The service coverage range of the access network device as a reader/writer device may include, for example, a geographical coverage area of the access network device as a reader/writer device, that is, passive devices within the coverage area can be read and written.

In this embodiment, by including at least one of the information of the passive device or the passive service-related capability information of the access network device in the network registration request message, it is convenient for the A-IoT management node to more accurately manage the passive device and the passive service, etc.

Optionally, before sending, by the A-IoT management node through the first network interface, the network registration response message to the access network device, the method further includes:
obtaining, by the A-IoT management node, a passive device management policy;
determining, by the A-IoT management node according to the passive device management policy, whether to allow the passive device to perform network registration.

In this embodiment, the passive device management policy is used to manage the passive device. Exemplarily, a passive device management policy can be configured for each access network device respectively, or, one set of passive device management policies can be configured for all access network devices, that is, the configured passive device management policy is applicable to all access network devices. For example, not authenticating a certain type of passive device, or not authenticating a passive device indicated in a passive message received from a certain type of access network device, or only authenticating a certain type of passive device, etc.

Optionally, the passive device management policy includes one of the following: not authenticating a passive device indicated in a passive message obtained from the access network device, or providing management services for all passive devices indicated in a passive message obtained from the access network device.

The passive device indicated in the passive message obtained from the access network device mentioned above is, for example, the passive device identified by the identifier of the passive device included in the passive message obtained from the access network device. The passive message can be understood as a message related to the A-IoT, for example, a network registration request message of a passive device.

The not authenticating a passive device indicated in a passive message obtained from the access network device can be understood as, for the passive device indicated in the passive message received from the access network device, the A-IoT management node does not authenticate it, that is, does not provide management services for it.

The providing management services for all passive devices indicated in a passive message obtained from the access network device can be understood as, for all passive devices indicated in the passive message received from the access network device, the A-IoT management node provides management services for them.

Correspondingly, the A-IoT management node can determine whether to allow the passive device to perform network registration according to the passive device management policy. For example, when the passive device management policy is not authenticating a passive device indicated in a passive message obtained from the access network device, the A-IoT management node determines not to allow the passive device to perform network registration. In this case, a response not allowing the passive device to perform network registration can be fed back to the access network device. When the passive device management policy is providing management services for all passive devices indicated in a passive message obtained from the access network device, the A-IoT management node determines to allow the passive device to perform network registration. In this case, the A-IoT management node can register the state of the passive device and feed back a network registration response message to the access network device.

In this embodiment, the A-IoT management node determines whether to allow the passive device to perform network registration according to the passive device management policy, which can improve the convenience of managing the passive device.

Optionally, the obtaining, by the A-IoT management node, the passive device management policy includes:
obtaining, by the A-IoT management node, a preconfigured passive device management policy;
   or
receiving, by the A-IoT management node, the passive device management policy sent by a first core network node;
   or
receiving, by the A-IoT management node, the passive device management policy sent by the A-IoT server.

In an implementation, the A-IoT management node can preconfigure the passive device management policy, so that the preconfigured passive device management policy can be directly read, with relatively high speed.

In another implementation, the A-IoT management node can receive the passive device management policy sent by the first core network node, wherein the first core network node may include but is not limited to an AMF, an SMF, a UDM, a PCF or an operator network system, etc., which is beneficial to improving the flexibility of configuring the passive device management policy.

In yet another implementation, the A-IoT management node can receive the passive device management policy sent by the A-IoT server. Exemplarily, the A-IoT management node can receive the passive device management policy sent by the A-IoT server through the second network interface, which is beneficial to making the obtained passive device management policy better meet the needs of the passive service.

Optionally, the target network interface includes the second network interface; the A-IoT-related information includes: a passive service instruction;
the performing, by the A-IoT management node, the transmission of the A-IoT-related information through the target network interface includes:
receiving, by the A-IoT management node through the second network interface, the passive service instruction sent by the A-IoT server;
processing, by the A-IoT management node, the passive service instruction.

The passive service instruction may include operation instructions such as inventory, positioning, and read/write. The Ambient Internet of Things (A-IoT) management node processes the passive service instruction. For example, the A-IoT management node may forward the passive service instruction to an access network device; or, the A-IoT management node may directly feed back a passive service processing result to an A-IoT server based on the passive service instruction. The passive service instruction may also be referred to as an A-IoT instruction or a passive instruction.

It can be understood that in the related art, in the process of performing service processing through a cellular network, it is often necessary to first establish a PDU session connection, and then perform service transmission based on the session connection, resulting in a relatively complex process. In this embodiment, the A-IoT management node directly receives the passive service instruction sent by the A-IoT server through the second network interface, and processes the passive service instruction without establishment of a PDU session connection, thereby simplifying a processing procedure of passive services and improving efficiency of passive service processing.

In some optional embodiments, the Ambient Internet of Things (A-IoT) server may send a passive service instruction to an A-IoT management node through forwarding by a Network Exposure Function (NEF). Specifically, the manner in which the A-IoT server determines the A-IoT management node to which the passive service instruction is to be sent may include: configuring, at the A-IoT server, an identifier of the A-IoT management node serving the A-IoT server (e.g., an FQDN, an IP address, or the like); or configuring, at the NEF, identification information of the A-IoT management node (e.g., an FQDN, an IP address, or the like), so that the NEF determines how to forward the passive service instruction to the A-IoT management node. The A-IoT server may determine the NEF to which the passive service instruction is to be sent by means such as tunnel binding, identifier binding, or the like, which is not limited in this embodiment.

Optionally, before processing, by the A-IoT management node, the passive service instruction, the method further includes:
determining, by the A-IoT management node, a passive service processing policy;
the processing, by the A-IoT management node, the passive service instruction includes:
   processing, by the A-IoT management node according to the passive service processing policy, the passive service instruction.

In this embodiment, the passive service processing policy can be used to manage the passive service.

Optionally, the passive service processing policy includes at least one of the following: a passive service access permission management rule, a passive service instruction processing rule, or a periodic inventory rule.

The passive service access permission management rule may, for example, specify types, IDs, and the like of passive devices or reader/writer devices allowed to provide services through a cellular network. The passive service instruction processing rule may, for example, include filtering rules requiring specific differentiated services (for example, special charging modes), positioning, or transparent transmission for passive service instructions. The periodic inventory rule may, for example, specify a period at which the A-IoT management node actively triggers periodic inventory for different types of passive devices.

In this embodiment, the A-IoT management node processes the passive service instruction according to the passive service processing policy, which facilitates more accurate and convenient control of passive service processing based on the cellular network.

Optionally, the determining, by the A-IoT management node, the passive service processing policy includes:
receiving, by the A-IoT management node through the second network interface, first information sent by the A-IoT server, and determining the passive service processing policy according to the first information;
   or
receiving, by the A-IoT management node, the passive service processing policy sent by a second core network node.

In an implementation, the A-IoT management node receives, through the second network interface, the first information sent by the A-IoT server, and can then determine the passive service processing policy according to the first information. For example, the first information can include quality of service requirement information of the passive service, and the A-IoT management node can determine the passive service processing policy according to the quality of service requirement information of the passive service; or, the first information can include the passive service processing policy, and the A-IoT management node can directly obtain the passive service processing policy from the first information. This implementation is beneficial to ensuring that the determined passive service processing policy can better meet the processing needs of the passive service.

Exemplarily, taking the Np2 interface using the HTTP2.0 protocol as an example, an example of a message exchanged between the cellular passive management function and the A-IoT server through the Np2 interface is as follows:

```
        "HEADERS
        - END_STREAM
        - END_HEADERS
        :method = POST
        :path = /resource
        :scheme = https
         CONTINUATION
         + END_HEADERS
         content-type = txt
        host = example.org (domain name/IP of the cellular passive management function)
         content-length = xxx (message content length)
         DATA
        + END_STREAM
        {binary data
        (
        passive service access permission management rule;
        passive service command processing rule;
        active periodic inventory rule
        etc.)}
        "
```

It should be noted that the message exchanged between the cellular passive management function and the A-IoT server can be forwarded through the NEF.

In another implementation, the A-IoT management node receives the passive service processing policy sent by the second core network node, wherein the second core network node may include UDM, PCF, etc., which is beneficial to improving the flexibility of configuring the passive service processing policy.

Optionally, before receiving, by the A-IoT management node through the second network interface, the passive service instruction sent by the A-IoT server, the method further includes:
preconfiguring, by the A-IoT management node, second information, or receiving, by the A-IoT management node through the first network interface, second information sent by the access network device, or obtaining, by the A-IoT management node, second information from a third core network node, wherein the second information includes at least one of the following: IP address information of the access network device, tunnel information of the access network device, or passive service capability information of the access network device;
   and/or
sending, by the A-IoT management node through the first network interface, third information to the access network device, wherein the third information includes at least one of the following: IP address information of the A-IoT management node or tunnel information of the A-IoT management node.

The third core network node can include UDM, SMF, PCF or NRF, etc. The passive service capability information of the access network device can include at least one of the following: indication information indicating whether the access network device has a passive service reader/writer function, information of the passive device served by the access network device as a reader/writer device, or a service coverage range of the access network device as a reader/writer device.

It can be understood that before the A-IoT management node receives the passive service instruction sent by the A-IoT server through the second network interface, capability negotiation, IP address configuration and/or tunnel information configuration need to be performed between the A-IoT management node and the A-IoT server, so that the A-IoT management node and the A-IoT server can initiate an IP connection or a tunnel connection for communication according to the IP address information or tunnel information of each other.

The following describes this embodiment with examples under different scenarios.

Scenario 1, the cellular passive management function and the RAN can respectively preconfigure the IP address information, tunnel information and/or RAN passive service capability information of each other, so as to initiate an IP connection or a tunnel connection for communication according to the address of each other.

Scenario 2, the cellular passive management function can interact with the RAN through the Np1 interface to receive the IP address information, tunnel information and/or RAN passive service support capability information of the RAN sent by the RAN, and send the IP address information and/or tunnel information of the cellular passive management function to the RAN.

Scenario 3, the cellular passive management function can determine the IP address information and/or tunnel information of the RAN by interacting with a core network element of the cellular network, and receive the RAN passive service capability information sent by the RAN through the Np1 interface.

Optionally, the processing, by the A-IoT management node, the passive service instruction includes:
when a type of the passive service instruction is a real-time type, sending, by the A-IoT management node, the passive service instruction to the access network device;
when the type of the passive service instruction is a non-real-time type, sending, by the A-IoT management node to the A-IoT server, a response to the passive service instruction.

In this embodiment, the real-time type passive service instruction is used to indicate that the passive service operation indicated by the passive service instruction needs to be completed by sending passive service indication information to the passive device (e.g., passive tag) through the cellular network, for example, services such as real-time inventory, real-time positioning, etc. The non-real-time type passive service instruction is relative to the real-time type passive service instruction, and is used to indicate that the passive service operation indicated by the passive service instruction does not need to request a response from the passive device (e.g., tag) in real time, and can be completed by interacting with the A-IoT management node in the cellular network, for example, query of a historical movement trajectory of a tag and statistics of tag information (for example, change information of a quantity of a certain type of tags in a specific area, such as general statistics of goods in a supermarket).

Correspondingly, when the type of the passive service instruction is a real-time type, the A-IoT management node sends the passive service instruction to the access network device, and the access network device can then send the passive service instruction to the passive device to obtain a response of the passive device to the passive service instruction; when the type of the passive service instruction is a non-real-time type, the A-IoT management node can determine a response according to the passive service instruction and feed the response back to the A-IoT server.

Exemplarily, the type of the passive service instruction may be determined by parsing the passive service instruction. For example, if parsing indicates that the passive service instruction is used to indicate a query of a historical movement trajectory of a tag, the type of the passive service instruction may be determined as the non-real-time type; if parsing indicates that the passive service instruction is used to indicate positioning, the type of the passive service instruction may be determined as the real-time type. Alternatively, indication information indicating the type of the passive service instruction may be carried in the passive service instruction, so as to quickly determine the type of the passive service instruction.

In this embodiment, when the type of the passive service instruction is a real-time type, the A-IoT management node sends the passive service instruction to the access network device; when the type of the passive service instruction is a non-real-time type, the A-IoT management node sends, to the A-IoT server, a response to the passive service instruction, which is beneficial to accurately and quickly responding to the passive service instruction.

Optionally, the passive service instruction carries first indication information, and the first indication information is used to indicate the type of the passive service instruction.

In this embodiment, by carrying the first indication information in the passive service instruction, the A-IoT management node can quickly and accurately determine the type of the passive service instruction based on the first indication information.

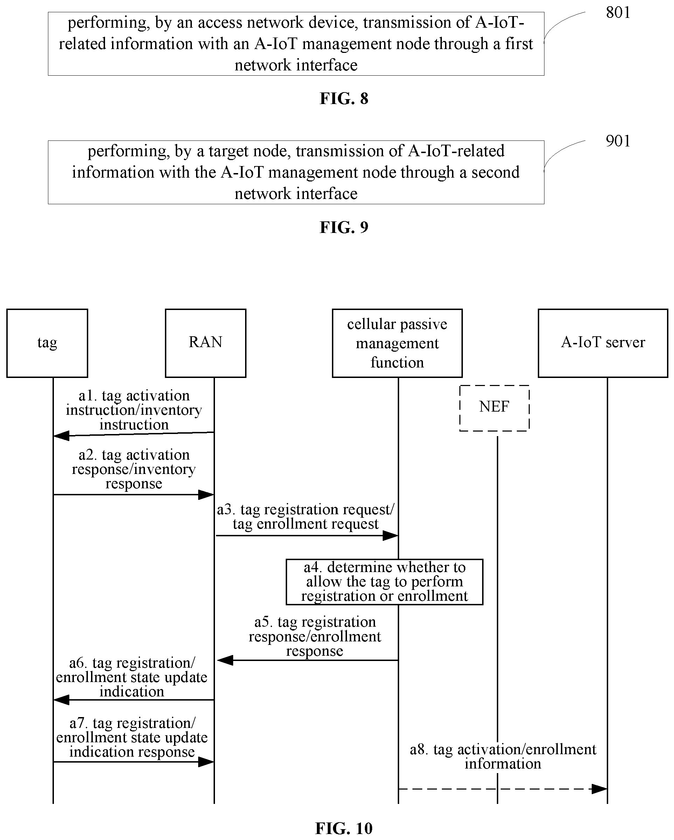

Referring to FIG. 8, FIG. 8 is a flowchart of an information transmission method provided by an embodiment of the present disclosure. As shown in FIG. 8, the method includes the following step.
Step 801, performing, by an access network device, transmission of Ambient Internet of Things (A-IoT)-related information with an A-IoT management node through a first network interface;
wherein the first network interface is an interface between the A-IoT management node and the access network device.

For the relevant content of the first network interface and the A-IoT-related information in this embodiment, reference can be made to the relevant description of the foregoing embodiments, and details are not repeated herein.

Specifically, when the access network device receives the A-IoT-related information sent by the A-IoT management node through the first network interface, the access network device may send the A-IoT-related information to the passive device; when the access network device receives the A-IoT-related information sent by the passive device, the access network device may send the A-IoT-related information to the A-IoT management node through the first network interface.

In some optional embodiments, an intermediate device, such as a repeater or a terminal, can be arranged between the access network device and the passive device, and the intermediate device can serve as an exciter of the passive device, and the access network device can serve as a reader/writer device of the passive device; or, the access network device can serve as both an exciter of the passive device and a reader/writer device of the passive device.

In the embodiments of the present disclosure, the A-IoT management node can perform transmission of A-IoT-related information with the access network device through the first network interface, so that transmission of A-IoT related information can be realized through a cellular network, which is beneficial to improving the communication distance of the A-IoT system; in addition, since the transmission of the A-IoT-related information is directly performed through the interface between the A-IoT management node and the access network device, the process of transmitting the A-IoT-related information in the cellular network can be simplified, and the transmission efficiency of the A-IoT-related information can be improved.

Optionally, an application layer protocol of the first network interface includes one of the following: a General Packet Radio Service Tunneling Protocol (GTP), a Next Generation Application Protocol (NG-AP), a Low Level Reader Protocol (LLRP), a Hypertext Transfer Protocol (HTTP), or a Message Queuing Telemetry Transport (MQTT) protocol;
and/or
a transport layer protocol of the first network interface includes one of the following: a Stream Control Transmission Protocol (SCTP), a Transmission Control Protocol (TCP), or a User Datagram Protocol (UDP).

It should be noted that for the implementation of this embodiment, reference can be made to the relevant description of the foregoing embodiments, and details are not repeated herein.

Optionally, the A-IoT-related information includes a network registration request message and a network registration response message; the performing, by the access network device, the transmission of the A-IoT-related information with the A-IoT management node through the first network interface includes:
sending, by the access network device, the network registration request message to the A-IoT management node through the first network interface, wherein the network registration request message is used to request network registration for a passive device, and the network registration request message includes at least one of information of the passive device or passive service-related capability information of the access network device;
receiving, by the access network device through the first network interface, the network registration response message sent by the A-IoT management node.

It should be noted that for the implementation of this embodiment, reference can be made to the relevant description of the foregoing embodiments, and details are not repeated herein.

Optionally, the information of the passive device includes at least one of the following: an identifier of the passive device, a type of the passive device, or a mobility characteristic of the passive device;
and/or
the passive service-related capability information of the access network device includes at least one of the following: indication information indicating whether the access network device has a passive service reader/writer function, information of the passive device served by the access network device as a reader/writer device, or a service coverage range of the access network device as a reader/writer device.

It should be noted that for the implementation of this embodiment, reference can be made to the relevant description of the foregoing embodiments, and details are not repeated herein.

Optionally, before sending, by the access network device, the network registration request message to the A-IoT management node through the first network interface, the method further includes:
receiving, by the access network device, a first response message sent by the passive device, wherein the first response message is a response message to an activation instruction or a response message to an inventory instruction, and the first response message includes the information of the passive device;
after receiving, by the access network device through the first network interface, the network registration response message sent by the A-IoT management node, the method further includes:
   sending, by the access network device, second indication information to the passive device, wherein the second indication information is used to indicate a state of the passive device or to indicate updating of the state of the passive device.

In practical applications, the access network device or the intermediate device can send an activation instruction or an inventory instruction to the passive device, and the passive device can send an activation response message or an inventory response message to the access network device according to the activation instruction or inventory instruction. The activation response message or inventory response message may include information of the passive device. Exemplarily, the activation response message may include but is not limited to at least one of an identifier of the passive device, a type of the passive device, or a mobility characteristic of the passive device, etc.; the inventory response message may include an identifier of the passive device. Based on the activation response message or inventory response message, the access network device can send a network registration request message to the A-IoT management node through the first network interface, and after receiving, through the first network interface, the network registration response message sent by the A-IoT management node, send the second indication information to the passive device that has been successfully registered/activated, used to indicate the state of the passive device, or used to indicate updating of the state of the passive device. The state of the passive device may include, but is not limited to, registered, enrolled, activated, unregistered, unenrolled, or inactivated. Accordingly, the passive device can update or adjust the state according to the second indication information. For example, when an original state of the passive device on the network side is unregistered/ unenrolled/inactivated, the second indication information can indicate that the updated state is registered/enrolled/activated.

In some optional embodiments, the access network device sends a state update instruction to the passive device, wherein the state update instruction can include an identifier of the passive device and the second indication information, and the state update instruction can be implemented using a known write instruction of the passive device (e.g., tag).

It should be noted that the access network device may initiate a network registration request for a single passive device, or initiate a network registration request for multiple passive devices. When initiating a network registration request for multiple passive devices, the request may be made in the same network registration request message, or may be made in different network registration request messages.

In this embodiment, before the access network device sends the network registration request message to the A-IoT management node through the first network interface, the access network device receives the first response message sent by the passive device, wherein the first response message is a response message to an activation instruction or a response message to an inventory instruction, and the first response message includes the information of the passive device; after the access network device receives, through the first network interface, the network registration response message sent by the A-IoT management node, the access network device sends second indication information to the passive device, wherein the second indication information is used to indicate the state of the passive device, or used to indicate updating of the state of the passive device, which is beneficial to ensuring the consistency of the understanding of the state of the passive device among all parties.

In some optional embodiments, the A-IoT management node can maintain the state of the passive device through operations such as periodic inventory.

Optionally, the method further includes:
preconfiguring, by the access network device, third information, or receiving, by the access network device through the first network interface, third information sent by the A-IoT management node, or obtaining, by the access network device, third information from a fourth core network node, wherein the third information includes at least one of the following: IP address information of the A-IoT management node or tunnel information of the A-IoT management node;
   and/or
sending, by the access network device, second information to the A-IoT management node through the first network interface, wherein the second information includes at least one of the following: IP address information of the access network device, tunnel information of the access network device, or passive service capability information of the access network device.

The fourth core network node can include a UDM, an SMF, a PCF or an NRF, etc. The passive service capability information of the access network device can include at least one of the following: indication information indicating whether the access network device has a passive service reader/writer function, information of the passive device served by the access network device as a reader/writer device, or a service coverage range of the access network device as a reader/writer device.

The following describes this embodiment with examples under different scenarios.

Scenario 1, the RAN and the cellular passive management function can respectively preconfigure the IP address information, tunnel information and/or RAN passive service capability information of each other, so that they can initiate an IP connection or a tunnel connection for communication according to the address of each other.

Scenario 2, the RAN can interact with the cellular passive management function through the Np1 interface, receive the IP address information and/or tunnel information sent by the cellular passive management function, and send the IP address information, tunnel information and/or RAN passive service support capability information of the RAN to the cellular passive management function.

Scenario 3, the RAN can determine the IP address information and/or tunnel information of the cellular passive management function by interacting with a core network element of the cellular network, and send the RAN passive service support capability information to the cellular passive management function through the Np1 interface.

Referring to FIG. 9, FIG. 9 is a flowchart of an information transmission method provided by an embodiment of the present disclosure. As shown in FIG. 9, the method includes the following step.
Step 901, performing, by a target node, transmission of A-IoT-related information with the A-IoT management node through a second network interface;
wherein the second network interface is an interface between the A-IoT management node and the target node, and the target node includes an A-IoT server or a network exposure function.

Optionally, an application layer protocol of the second network interface includes one of the following: an Application Level Event (ALE) protocol, a Hypertext Transfer Protocol (HTTP), or a Message Queuing Telemetry Transport (MQTT) protocol;
and/or
a transport layer protocol of the second network interface includes one of the following: a Transmission Control Protocol (TCP) or a User Datagram Protocol (UDP).

Optionally, the A-IoT-related information includes at least one of a passive service instruction or first information; the performing, by the target node, the transmission of the A-IoT-related information with the A-IoT management node through the second network interface includes at least one of the following:
sending, by the target node, the passive service instruction to the A-IoT management node through the second network interface;
sending, by the target node, the first information to the A-IoT management node through the second network interface, wherein the first information is used to determine a passive service processing policy.

It should be noted that for the implementation of this embodiment, reference can be made to the relevant description of the foregoing embodiments, and details are not repeated herein.

The embodiments of the present disclosure are illustrated below by taking the passive device being a tag as an example.

### Example 1: passive device registration

Referring to FIG. 10, the passive device registration process provided by an embodiment of the present disclosure includes the following steps.

Step a1: the RAN initiates a tag activation instruction/inventory instruction to the tag. The RAN may select a specific intermediate device (e.g., UE, relay device, etc.) within its service range to use as an exciter; or use an exciter fixedly deployed for tags in the area as the exciter for periodic tag management; or the RAN itself acts as the exciter, i.e., the RAN performs both roles of reader/writer and exciter. In order to ensure the success rate of the inventory, the step a1 can be repeated multiple times.

Step a2: the tag sends a tag activation response/inventory response to the RAN according to the tag activation instruction/inventory instruction. If the tag receives a tag activation instruction, i.e., not an inventory instruction of the known passive system, the tag may carry, in the response message, one or more pieces of information including a tag identifier, a tag type, and a mobility characteristic of the tag. If the tag receives a tag inventory instruction, i.e., an inventory instruction of the known passive system, the tag may carry the tag identifier in the response message.

Step a3: after receiving the tag activation response/inventory response, the RAN initiates a network registration/enrollment request for the tag to the cellular passive management function through the Np1 interface.

Step a4: the cellular passive management function determines whether to allow the tag to perform registration or enrollment. Specifically, the cellular passive management function can determine whether to allow the tag to perform registration or enrollment in the cellular network according to a tag management policy.

Step a5: the cellular passive management function sends a response message of the tag registration/enrollment request to the RAN.

Step a6: after receiving the response message of the tag registration/enrollment request, the RAN sends, to a tag that has been successfully registered/activated, a tag registration/enrollment or activation state update instruction, used to instruct the tag to update its registration/enrollment or activation state information in the network.

Step a7: the tag sends a tag registration/enrollment or activation state update response to the tag registration activation device.

Step a8: after the tag is successfully registered/enrolled, the cellular passive management function can actively push tag activation information to the A-IoT server, including one or more of tag identification information, tag type, tag characteristics, etc.

The passive tag registration process provided in this embodiment does not require interaction of multiple network elements and multiple steps to complete registration and authentication, and the passive registration process is relatively simple.

### Example 2: passive service processing

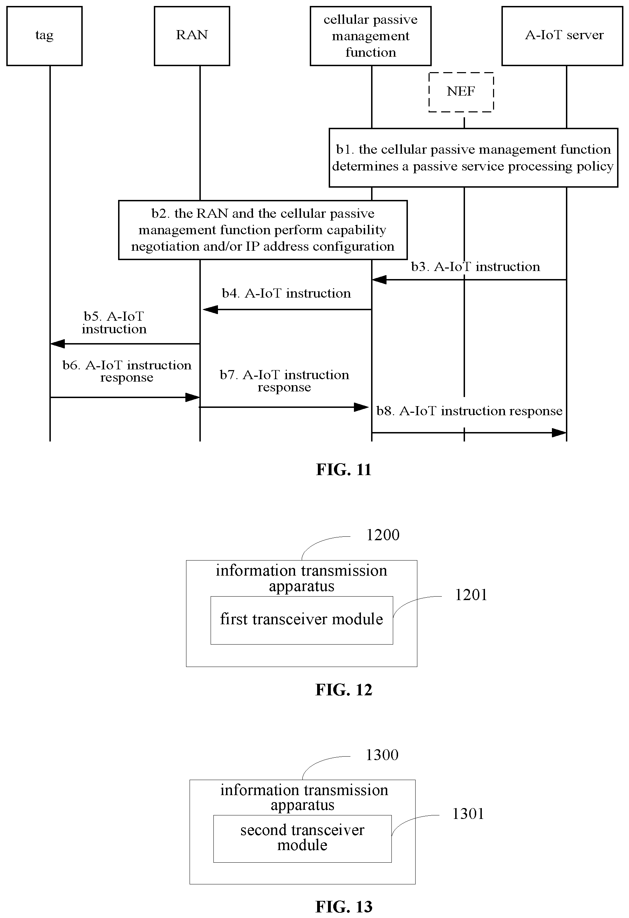

Referring to FIG. 11, the passive service processing procedure provided by an embodiment of the present disclosure includes the following steps.

Step b1: the cellular passive management function determines a passive service processing policy.

Step b2: the RAN and the cellular passive management function perform capability negotiation and/or IP address configuration.

Step b3: the A-IoT server sends an A-IoT instruction to the cellular passive management function through the Np2 interface.

Step b4: the cellular passive management function sends the A-IoT instruction to the RAN through the Np1 interface.

Step b5: the RAN can send the A-IoT instruction to a repeater (e.g., an exciter) within its service range or coverage range, or when the RAN does not need to use a repeater to send the A-IoT instruction to the tag, the RAN can send the A-IoT instruction to the tag itself; when the RAN does not need to use a repeater to send the excitation signal to the tag, the RAN can send the excitation signal to the tag itself.

Step b6: the RAN receives an A-IoT instruction response message from the tag.

Step b7: the RAN sends the A-IoT instruction response message to the cellular passive management function through the Np1 interface.

Step b8: the cellular passive management function sends the A-IoT instruction response message to the A-IoT server through the Np2 interface.

Taking an example in which the A-IoT instruction is to inventory tags whose tag IDs include characters "abc", when the Np2 interface and the Np1 interface use an HTTP2.0 protocol, implementations of step b3, step b4, step b7, and step b8 are exemplified as follows:

for Step b3 and Step b4, the A-IoT instruction sent by the A-IoT server to the cellular passive management function through the Np2 interface, or the A-IoT instruction sent by the cellular passive management function to the RAN through the Np1 interface is carried in HTTP2.0. The passive service can use the GET command to perform tag inventory, wherein the HTTP/2.0 header field "path" indicates the reader/writer identifier/RAN identifier/tag identifier, etc., and the HTTP/2.0 header field "Host" indicates the domain name/IP of the cellular passive management function:

```
        "HEADERS
        + END_STREAM
        + END_HEADERS
         :method = GET
        :scheme = https
        :path = /resource (reader/writer identifier/RAN identifier/tag identifier including field
 abc, etc.)
        host = example.org (domain name/IP of the cellular passive management function)
        accept = txt"
```

For Step b7 and Step b8, the cellular passive management function obtains the A-IoT instruction response through the Np1 interface, and sends the A-IoT instruction response to the A-IoT server through the Np2 interface, carrying the identification information of the inventoried tag in DATA, an example is as follows:

```
        "HEADERS
        - END_STREAM
        + END_HEADERS
        :status = 200
        content-type =txt
        content-length = xxx
        DATA
        + END_STREAM
        {binary data (tag identification information abcxxx)}
        "
```

The passive service processing procedure provided in this embodiment does not require establishment of a PDU session connection, and the service processing procedure is relatively simple.

In summary, the embodiments of the present disclosure provide a system architecture integrating Ambient Internet of Things (A-IoT) technology with a cellular system. In this architecture, a new cellular passive management function and a new interface Np are introduced. Based on this architecture, a registration procedure for cellular passive tags and a service processing procedure for passive services are proposed. The registration and authentication can be completed without multi-step interactions among multiple network elements, and no PDU session connection needs to be established, making the solution more suitable for lightweight deployment scenarios. In contrast, in known cellular networks, the registration, authentication, and verification procedures for cellular terminal devices, as well as most service procedures, generally require the initiation of a session connection and rely on the session connection for service transmission. The overall process is relatively complex and is not suitable for the management of massive passive tags or for passive service transmission.

An embodiment of the present disclosure further provides an A-IoT management node. Referring to FIG. 12, FIG. 12 is a structural diagram of an A-IoT management node provided by an embodiment of the present disclosure. Since the principle of solving problems by the A-IoT management node is similar to the information processing method on the A-IoT management node side in the embodiments of the present disclosure, the implementation of the A-IoT management node can refer to the implementation of the method, and details thereof are not repeated herein.

As shown in FIG. 12, the A-IoT management node 1200 includes:
a first transceiver module 1201, configured to perform transmission of A-IoT-related information through a target network interface;
wherein the target network interface includes at least one of a first network interface or a second network interface, the first network interface is an interface between the A-IoT management node and an access network device, and the second network interface is an interface between the A-IoT management node and a target node, and the target node includes an A-IoT server or a network exposure function.

Optionally, an application layer protocol of the first network interface includes one of the following: a General Packet Radio Service Tunneling Protocol (GTP), a Next Generation Application Protocol (NG-AP), a Low Level Reader Protocol (LLRP), a Hypertext Transfer Protocol (HTTP), or a Message Queuing Telemetry Transport (MQTT) protocol;
and/or
a transport layer protocol of the first network interface includes one of the following: a Stream Control Transmission Protocol (SCTP), a Transmission Control Protocol (TCP), or a User Datagram Protocol (UDP).

Optionally, an application layer protocol of the second network interface includes one of the following: an Application Level Event (ALE) protocol, a Hypertext Transfer Protocol (HTTP), or a Message Queuing Telemetry Transport (MQTT) protocol;
and/or
a transport layer protocol of the second network interface includes one of the following: a Transmission Control Protocol (TCP) or a User Datagram Protocol (UDP).

Optionally, the target network interface includes the first network interface, and the A-IoT-related information includes a network registration request message and a network registration response message;
the first transceiver module is specifically configured to:
receive, through the first network interface, the network registration request message sent by the access network device, wherein the network registration request message is used to request network registration for a passive device, and the network registration request message includes at least one of information of the passive device or passive service-related capability information of the access network device;
send, through the first network interface, the network registration response message to the access network device.

Optionally, the information of the passive device includes at least one of the following: an identifier of the passive device, a type of the passive device, or a mobility characteristic of the passive device;
and/or
the passive service-related capability information of the access network device includes at least one of the following: indication information indicating whether the access network device has a passive service reader/writer function, information of the passive device served by the access network device as a reader/writer device, or a service coverage range of the access network device as a reader/writer device.

Optionally, the A-IoT management node further includes:
a first obtaining module, configured to obtain a passive device management policy before sending the network registration response message to the access network device through the first network interface;
a first determining module, configured to determine whether to allow the passive device to perform network registration according to the passive device management policy.

Optionally, the first obtaining module is specifically configured to:
obtain a preconfigured passive device management policy;
   or
receive the passive device management policy sent by a first core network node;
   or
receive the passive device management policy sent by the A-IoT server.

Optionally, the passive device management policy includes one of the following: not authenticating a passive device indicated in a passive message obtained from the access network device, or providing management services for all passive devices indicated in a passive message obtained from the access network device.

Optionally, when the application layer protocol of the first network interface is GTP, the network registration request message is carried in a GTP message, and a message type or a next extension header type of the GTP message includes a first message type, wherein the first message type is used to indicate that the GTP message is a network registration request message of a passive device.

Optionally, the target network interface includes the second network interface; the A-IoT-related information includes: a passive service instruction;
the first transceiver module is specifically configured to receive, through the second network interface, the passive service instruction sent by the A-IoT server;
the A-IoT management node further includes a processing module, configured to process the passive service instruction.

Optionally, the A-IoT management node further includes a second determining module, configured to determine a passive service processing policy before processing the passive service instruction;
the processing module is specifically configured to process the passive service instruction according to the passive service processing policy.

Optionally, the passive service processing policy includes at least one of the following: a passive service access permission management rule, a passive service instruction processing rule, or a periodic inventory rule.

Optionally, the second determining module is specifically configured to:
receive, through the second network interface, first information sent by the A-IoT server, and determine the passive service processing policy according to the first information;
   or
receive the passive service processing policy sent by a second core network node.

Optionally, the A-IoT management node further includes:
a first configuration module, configured to, before receiving, through the second network interface, the passive service instruction sent by the A-IoT server, preconfigure second information, or receive, through the first network interface, second information sent by the access network device, or obtain second information from a third core network node, wherein the second information includes at least one of the following: IP address information of the access network device, tunnel information of the access network device, or passive service capability information of the access network device;
   and/or
the first transceiver module is further configured to send third information to the access network device through the first network interface, wherein the third information includes at least one of the following: IP address information of the A-IoT management node or tunnel information of the A-IoT management node.

Optionally, the processing module is specifically configured to:
when a type of the passive service instruction is a real-time type, send the passive service instruction to the access network device;
when the type of the passive service instruction is a non-real-time type, send, to the A-IoT server, a response to the passive service instruction.

Optionally, the passive service instruction carries first indication information, and the first indication information is used to indicate the type of the passive service instruction.

The A-IoT management node provided by the embodiments of the present disclosure can execute the method embodiments on the A-IoT management node side described above, and the implementation principle and technical effect are similar, and will not be repeated in this embodiment.

An embodiment of the present disclosure further provides an access network device. Referring to FIG. 13, FIG. 13 is a structural diagram of an access network device provided by an embodiment of the present disclosure. Since the principle of solving problems by the access network device is similar to the information processing method on the access network device side in the embodiments of the present disclosure, the implementation of the access network device can refer to the implementation of the method, and details thereof are not repeated herein.

As shown in FIG. 13, the access network device 1300 includes:
a second transceiver module 1301, configured to perform transmission of Ambient Internet of Things (A-IoT)-related information with an A-IoT management node through a first network interface;
wherein the first network interface is an interface between the A-IoT management node and the access network device.

Optionally, an application layer protocol of the first network interface includes one of the following: a General Packet Radio Service Tunneling Protocol (GTP), a Next Generation Application Protocol (NG-AP), a Low Level Reader Protocol (LLRP), a Hypertext Transfer Protocol (HTTP), or a Message Queuing Telemetry Transport (MQTT) protocol;
and/or
a transport layer protocol of the first network interface includes one of the following: a Stream Control Transmission Protocol (SCTP), a Transmission Control Protocol (TCP), or a User Datagram Protocol (UDP).

Optionally, the A-IoT-related information includes a network registration request message and a network registration response message; the second transceiver module is specifically configured to:
send the network registration request message to the A-IoT management node through the first network interface, wherein the network registration request message is used to request network registration for a passive device, and the network registration request message includes at least one of information of the passive device or passive service-related capability information of the access network device;
receive, through the first network interface, the network registration response message sent by the A-IoT management node.

Optionally, the information of the passive device includes at least one of the following: an identifier of the passive device, a type of the passive device, or a mobility characteristic of the passive device;
and/or
the passive service-related capability information of the access network device includes at least one of the following: indication information indicating whether the access network device has a passive service reader/writer function, information of the passive device served by the access network device as a reader/writer device, or a service coverage range of the access network device as a reader/writer device.

Optionally, the access network device further includes:
a first receiving module, configured to, before sending the network registration request message to the A-IoT management node through the first network interface, receive a first response message sent by the passive device, wherein the first response message is a response message to an activation instruction or a response message to an inventory instruction, and the first response message includes the information of the passive device;
the access network device further includes:
   a first sending module, configured to, after receiving, through the first network interface, the network registration response message sent by the A-IoT management node, send second indication information to the passive device, wherein the second indication information is used to indicate a state of the passive device or to indicate updating of the state of the passive device.

Optionally, the access network device further includes:
a second configuration module, configured to preconfigure third information, or receive, through the first network interface, third information sent by the A-IoT management node, or obtain third information from a fourth core network node, wherein the third information includes at least one of the following: IP address information of the A-IoT management node or tunnel information of the A-IoT management node;
   and/or
the second transceiver module is further configured to send, through the first network interface, second information to the A-IoT management node, wherein the second information includes at least one of the following: IP address information of the access network device, tunnel information of the access network device, or passive service capability information of the access network device.

The access network device provided by the embodiments of the present disclosure can execute the method embodiments on the access network device side described above, and the implementation principle and technical effect are similar, and will not be repeated in this embodiment.

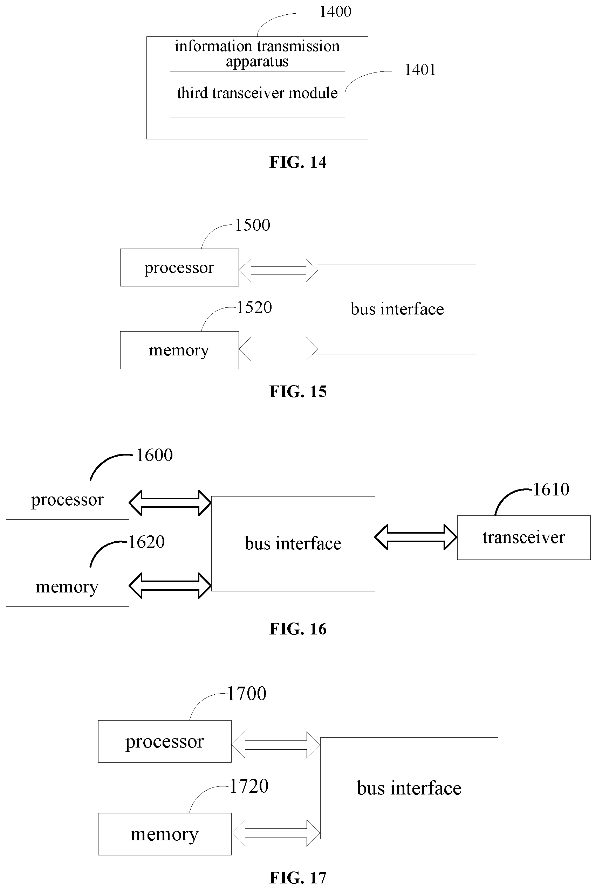

An embodiment of the present disclosure further provides a target node. Referring to FIG. 14, FIG. 14 is a structural diagram of a target node provided by an embodiment of the present disclosure. Since the principle of solving problems by the target node is similar to the information processing method on the target node side in the embodiments of the present disclosure, the implementation of the target node can refer to the implementation of the method, and details thereof are not repeated herein.

As shown in FIG. 14, the target node 1400 includes:
a third transceiver module 1401, configured to perform transmission of Ambient Internet of Things (A-IoT)-related information with an A-IoT management node through a second network interface;
wherein the second network interface is an interface between the A-IoT management node and the target node, and the target node includes an A-IoT server or a network exposure function.

Optionally, an application layer protocol of the second network interface includes one of the following: an Application Level Event (ALE) protocol, a Hypertext Transfer Protocol (HTTP), or a Message Queuing Telemetry Transport (MQTT) protocol;
and/or, a transport layer protocol of the second network interface includes one of the following: a Transmission Control Protocol (TCP) or a User Datagram Protocol (UDP).

Optionally, the A-IoT-related information includes at least one of a passive service instruction or first information; the third transceiver module is specifically configured for at least one of the following:
sending, by the target node, the passive service instruction to the A-IoT management node through the second network interface;
sending, by the target node, the first information to the A-IoT management node through the second network interface, wherein the first information is used to determine a passive service processing policy.

The target node provided by the embodiments of the present disclosure can execute the method embodiments on the target node side described above, and the implementation principle and technical effect are similar, and will not be repeated in this embodiment.

An embodiment of the present disclosure further provides an information transmission system, including a passive device, an access network device, an A-IoT management node, a target node, and a target network interface;
wherein the target network interface includes at least one of a first network interface or a second network interface, the first network interface is an interface between the A-IoT management node and the access network device, and the second network interface is an interface between the A-IoT management node and the target node, and the target node includes an A-IoT server or a network exposure function.

The A-IoT management node can be the A-IoT management node provided by the embodiment shown in FIG. 12, the access network device can be the access network device provided by the embodiment shown in FIG. 13, and the target node can be the target node provided by the embodiment shown in FIG. 14. For brevity, details are not described herein again.

An embodiment of the present disclosure further provides an A-IoT management node. As shown in FIG. 15, the A-IoT management node of the embodiment of the present disclosure includes: a processor 1500, configured to read a program stored in a memory 1520, and execute the following process:
performing transmission of A-IoT-related information through a target network interface; wherein the target network interface includes at least one of a first network interface or a second network interface, the first network interface is an interface between the A-IoT management node and an access network device, and the second network interface is an interface between the A-IoT management node and a target node, and the target node includes an A-IoT server or a network exposure function.

In FIG. 15, a bus architecture may include any number of interconnected buses and bridges, which interconnect various circuits including one or more processors, represented by processor 1500, and a memory, represented by memory 1520. The bus architecture may further interconnect various other circuits, such as peripheral devices, voltage regulators, and power management circuits, which are well known in the art and therefore will not be described in further detail herein. A bus interface provides an interface. A transceiver 1510 may include multiple components, including a transmitter and a receiver, and provides a unit for communicating with various other apparatuses over a transmission medium. The processor 1500 is responsible for managing the bus architecture and for general processing, and the memory 1520 may store data used by the processor 1500 when performing operations.

The A-IoT management node provided by the embodiments of the present disclosure can execute the method embodiments, and the implementation principle and technical effect are similar, and will not be repeated in this embodiment.

An embodiment of the present disclosure further provides an access network device. As shown in FIG. 16, the terminal of the embodiment of the present disclosure includes: a processor 1600 and a transceiver 1610, wherein the processor 1600 is configured to read a program stored in a memory 1620, and execute the following process:
performing transmission of Ambient Internet of Things (A-IoT)-related information with an A-IoT management node through a first network interface;
wherein the first network interface is an interface between the A-IoT management node and the access network device.

In FIG. 16, a bus architecture may include any number of interconnected buses and bridges, which interconnect various circuits including one or more processors, represented by processor 1600, and a memory, represented by memory 1620. The bus architecture may further interconnect various other circuits, such as peripheral devices, voltage regulators, and power management circuits, which are well known in the art and therefore will not be described in further detail herein. A bus interface provides an interface. The transceiver 1610 may include multiple components, including a transmitter and a receiver, and provides a unit for communicating with various other apparatuses over a transmission medium. For different user equipment, a user interface 1630 may also be an interface capable of connecting externally or internally to required devices, and connected devices include but are not limited to a keypad, a display, a speaker, a microphone, a joystick, etc.

The processor 1600 is responsible for managing the bus architecture and general processing, and the memory 1620 may store data used by the processor 1600 when performing operations.

The access network device provided by the embodiments of the present disclosure can execute the method embodiments, and the implementation principle and technical effect are similar, and will not be repeated in this embodiment.

An embodiment of the present disclosure further provides a target node. As shown in FIG. 17, the target node of the embodiment of the present disclosure includes: a processor 1700, configured to read a program stored in a memory 1720, and execute the following process:
performing transmission of Ambient Internet of Things (A-IoT)-related information with an A-IoT management node through a second network interface; wherein the second network interface is an interface between the A-IoT management node and the target node, and the target node includes an A-IoT server or a network exposure function.

In FIG. 17, a bus architecture may include any number of interconnected buses and bridges, which interconnect various circuits including one or more processors, represented by processor 1700, and a memory, represented by memory 1720. The bus architecture may further interconnect various other circuits, such as peripheral devices, voltage regulators, and power management circuits, which are well known in the art and therefore will not be described in further detail herein. A bus interface provides an interface. A transceiver 1710 may include multiple components, including a transmitter and a receiver, and provides a unit for communicating with various other apparatuses over a transmission medium. The processor 1700 is responsible for managing the bus architecture and for general processing, and the memory 1720 may store data used by the processor 1700 when performing operations.

The target node provided by the embodiments of the present disclosure can execute the method embodiments, and the implementation principle and technical effect are similar, and will not be repeated in this embodiment.

In addition, a computer-readable storage medium of an embodiment of the present disclosure is configured to store a computer program, wherein the computer program, when executed by a processor, implements the following step:
performing transmission of A-IoT-related information through a target network interface; wherein the target network interface includes at least one of a first network interface or a second network interface, the first network interface is an interface between the A-IoT management node and an access network device, and the second network interface is an interface between the A-IoT management node and a target node, and the target node includes an A-IoT server or a network exposure function;
   or
performing transmission of Ambient Internet of Things (A-IoT)-related information with an A-IoT management node through a first network interface; wherein the first network interface is an interface between the A-IoT management node and the access network device;
   or
performing transmission of Ambient Internet of Things (A-IoT)-related information with an A-IoT management node through a second network interface; wherein the second network interface is an interface between the A-IoT management node and the target node, and the target node includes an A-IoT server or a network exposure function.

In the embodiments provided in the present disclosure, it should be understood that the disclosed methods and apparatuses can be implemented in other manners. For example, the apparatus embodiments described above are merely illustrative. For instance, the division of the units is only a logical function division, and there may be other division methods in actual implementation, for example, multiple units or components can be combined or integrated into another system, or some features can be omitted, or not executed. In addition, the coupling or direct coupling or communication connection shown or discussed can be through some interfaces, indirect coupling or communication connection of apparatuses or units, and can be in electrical, mechanical or other forms.

In addition, each functional unit in various embodiments of the present disclosure can be integrated into one processing unit, or each unit can exist physically alone, or two or more units can be integrated into one unit. The integrated units can be implemented in the form of hardware, or in the form of hardware plus software functional units.

The integrated units implemented in the form of software functional units can be stored in a computer-readable storage medium. The software functional units are stored in a storage medium and include several instructions to cause a computer device (which may be a personal computer, a server, or a network device, etc.) to execute part of the steps of the transceiving methods described in the various embodiments of the present disclosure. The aforementioned storage medium includes: U disk, removable hard disk, Read-Only Memory (ROM), Random Access Memory (RAM), magnetic disk or optical disk, and other media that can store program codes.

The above are preferred embodiments of the present disclosure. It should be noted that, for those of ordinary skill in the art, various improvements and modifications may be made without departing from the principles of the present disclosure, and such improvements and modifications shall also fall within the protection scope of the present disclosure.

## Claims

1. An information transmission method, comprising:
performing, by an Ambient Internet of Things (A-IoT) management node, transmission of A-IoT-related information through a target network interface;
wherein the target network interface comprises at least one of a first network interface or a second network interface, the first network interface is an interface between the A-IoT management node and an access network device, and the second network interface is an interface between the A-IoT management node and a target node, and the target node comprises an A-IoT server or a network exposure function.

2. The method according to claim 1, wherein an application layer protocol of the first network interface comprises one of the following: a General Packet Radio Service Tunneling Protocol (GTP), a Next Generation Application Protocol (NG-AP), a Low Level Reader Protocol (LLRP), a Hypertext Transfer Protocol (HTTP), or a Message Queuing Telemetry Transport (MQTT) protocol;
and/or
a transport layer protocol of the first network interface comprises one of the following: a Stream Control Transmission Protocol (SCTP), a Transmission Control Protocol (TCP), or a User Datagram Protocol (UDP).

3. The method according to claim 1, wherein an application layer protocol of the second network interface comprises one of the following: an Application Level Event (ALE) protocol, a Hypertext Transfer Protocol (HTTP), or a Message Queuing Telemetry Transport (MQTT) protocol;
and/or
a transport layer protocol of the second network interface comprises one of the following: a Transmission Control Protocol (TCP) or a User Datagram Protocol (UDP).

4. The method according to claim 1, wherein the target network interface comprises the first network interface; the A-IoT-related information comprises a network registration request message and a network registration response message;
performing, by the A-IoT management node, the transmission of the A-IoT-related information through the target network interface comprises:
receiving, by the A-IoT management node through the first network interface, the network registration request message sent by the access network device, wherein the network registration request message is used to request network registration for a passive device, and the network registration request message comprises at least one of information of the passive device or passive service-related capability information of the access network device;
sending, by the A-IoT management node through the first network interface, the network registration response message to the access network device.

5. The method according to claim 4, wherein the information of the passive device comprises at least one of the following: an identifier of the passive device, a type of the passive device, or a mobility characteristic of the passive device;
and/or
the passive service-related capability information of the access network device comprises at least one of the following: indication information indicating whether the access network device has a passive service reader/writer function, information of the passive device served by the access network device as a reader/writer device, or a service coverage range of the access network device as a reader/writer device.

6. The method according to claim 4, wherein before sending, by the A-IoT management node through the first network interface, the network registration response message to the access network device, the method further comprises:
obtaining, by the A-IoT management node, a passive device management policy;
determining, by the A-IoT management node according to the passive device management policy, whether to allow the passive device to perform network registration.

7. The method according to claim 6, wherein obtaining, by the A-IoT management node, the passive device management policy comprises:
obtaining, by the A-IoT management node, a preconfigured passive device management policy; or
receiving, by the A-IoT management node, the passive device management policy sent by a first core network node; or
receiving, by the A-IoT management node, the passive device management policy sent by the A-IoT server.

8. The method according to claim 6, wherein the passive device management policy comprises one of the following:
not authenticating a passive device indicated in a passive message obtained from the access network device, or
providing management service for all passive devices indicated in a passive message obtained from the access network device.

9. The method according to claim 4, wherein when the application layer protocol of the first network interface is GTP, the network registration request message is carried in a GTP message, and a message type or a next extension header type of the GTP message comprises a first message type, wherein the first message type is used to indicate that the GTP message is a network registration request message for a passive device.

10. The method according to any one of claims 1 to 9, wherein the target network interface comprises the second network interface; the A-IoT-related information comprises a passive service instruction;
performing, by the A-IoT management node, the transmission of the A-IoT-related information through the target network interface comprises:
receiving, by the A-IoT management node through the second network interface, the passive service instruction sent by the A-IoT server;
processing, by the A-IoT management node, the passive service instruction.

11. The method according to claim 10, wherein before processing, by the A-IoT management node, the passive service instruction, the method further comprises:
determining, by the A-IoT management node, a passive service processing policy;
processing, by the A-IoT management node, the passive service instruction comprises:
processing, by the A-IoT management node according to the passive service processing policy, the passive service instruction.

12. The method according to claim 11, wherein the passive service processing policy comprises at least one of the following:
a passive service access permission management rule;
a passive service instruction processing rule; or
a periodic inventory rule.

13. The method according to claim 11, wherein determining, by the A-IoT management node, the passive service processing policy comprises:
receiving, by the A-IoT management node through the second network interface, first information sent by the A-IoT server, and determining the passive service processing policy according to the first information; or
receiving, by the A-IoT management node, the passive service processing policy sent by a second core network node.

14. The method according to claim 10, wherein before receiving, by the A-IoT management node through the second network interface, the passive service instruction sent by the A-IoT server, the method further comprises:
preconfiguring, by the A-IoT management node, second information, or receiving, by the A-IoT management node through the first network interface, second information sent by the access network device, or obtaining, by the A-IoT management node, second information from a third core network node, wherein the second information comprises at least one of the following: IP address information of the access network device, tunnel information of the access network device, or passive service capability information of the access network device; and/or
sending, by the A-IoT management node through the first network interface, third information to the access network device, wherein the third information comprises at least one of the following: IP address information of the A-IoT management node or tunnel information of the A-IoT management node.

15. The method according to claim 10, wherein processing, by the A-IoT management node, the passive service instruction comprises:
when a type of the passive service instruction is a real-time type, sending, by the A-IoT management node, the passive service instruction to the access network device;
when the type of the passive service instruction is a non-real-time type, sending, by the A-IoT management node to the A-IoT server, a response to the passive service instruction.

16. The method according to claim 15, wherein the passive service instruction carries first indication information, and the first indication information is used to indicate the type of the passive service instruction.

17. An information transmission method, comprising:
performing, by an access network device, transmission of Ambient Internet of Things (A-IoT)-related information with an A-IoT management node through a first network interface;
wherein the first network interface is an interface between the A-IoT management node and the access network device.

18. The method according to claim 17, wherein an application layer protocol of the first network interface comprises one of the following: a General Packet Radio Service Tunneling Protocol (GTP), a Next Generation Application Protocol (NG-AP), a Low Level Reader Protocol (LLRP), a Hypertext Transfer Protocol (HTTP), or a Message Queuing Telemetry Transport (MQTT) protocol;
and/or
a transport layer protocol of the first network interface comprises one of the following: a Stream Control Transmission Protocol (SCTP), a Transmission Control Protocol (TCP), or a User Datagram Protocol (UDP).

19. The method according to claim 17, wherein the A-IoT-related information comprises a network registration request message and a network registration response message; performing, by the access network device, the transmission of the A-IoT-related information with the A-IoT management node through the first network interface comprises:
sending, by the access network device, the network registration request message to the A-IoT management node through the first network interface, wherein the network registration request message is used to request network registration for a passive device, and the network registration request message comprises at least one of information of the passive device or passive service-related capability information of the access network device;
receiving, by the access network device through the first network interface, the network registration response message sent by the A-IoT management node.

20. The method according to claim 19, wherein the information of the passive device comprises at least one of the following: an identifier of the passive device, a type of the passive device, or a mobility characteristic of the passive device;
and/or
the passive service-related capability information of the access network device comprises at least one of the following: indication information indicating whether the access network device has a passive service reader/writer function, information of the passive device served by the access network device as a reader/writer device, or a service coverage range of the access network device as a reader/writer device.

21. The method according to claim 19, wherein before sending, by the access network device, the network registration request message to the A-IoT management node through the first network interface, the method further comprises:
receiving, by the access network device, a first response message sent by the passive device, wherein the first response message is a response message to an activation instruction or a response message to an inventory instruction, and the first response message comprises the information of the passive device;
after receiving, by the access network device through the first network interface, the network registration response message sent by the A-IoT management node, the method further comprises:
sending, by the access network device, second indication information to the passive device, wherein the second indication information is used to indicate a state of the passive device or to indicate updating of the state of the passive device.

22. The method according to any one of claims 17 to 19, further comprising:
preconfiguring, by the access network device, third information, or receiving, by the access network device through the first network interface, third information sent by the A-IoT management node, or obtaining, by the access network device, third information from a fourth core network node, wherein the third information comprises at least one of the following: IP address information of the A-IoT management node or tunnel information of the A-IoT management node;
and/or
sending, by the access network device, second information to the A-IoT management node through the first network interface, wherein the second information comprises at least one of the following: IP address information of the access network device, tunnel information of the access network device, or passive service capability information of the access network device.

23. An information transmission method, comprising:
performing, by a target node, transmission of Ambient Internet of Things (A-IoT)-related information with an A-IoT management node through a second network interface;
wherein the second network interface is an interface between the A-IoT management node and the target node, and the target node comprises an A-IoT server or a network exposure function.

24. The method according to claim 23, wherein an application layer protocol of the second network interface comprises one of the following: an Application Level Event (ALE) protocol, a Hypertext Transfer Protocol (HTTP), or a Message Queuing Telemetry Transport (MQTT) protocol;
and/or
a transport layer protocol of the second network interface comprises one of the following: a Transmission Control Protocol (TCP) or a User Datagram Protocol (UDP).

25. The method according to claim 24, wherein the A-IoT-related information comprises at least one of a passive service instruction or first information; performing, by the target node, the transmission of the A-IoT-related information with the A-IoT management node through the second network interface comprises at least one of the following:
sending, by the target node, the passive service instruction to the A-IoT management node through the second network interface; or
sending, by the target node, the first information to the A-IoT management node through the second network interface, wherein the first information is used to determine a passive service processing policy.

26. An Ambient Internet of Things (A-IoT) management node, comprising:
a first transceiver module, configured to perform transmission of A-IoT-related information through a target network interface;
wherein the target network interface comprises at least one of a first network interface or a second network interface, the first network interface is an interface between the A-IoT management node and an access network device, and the second network interface is an interface between the A-IoT management node and a target node, and the target node comprises an A-IoT server or a network exposure function.

27. An access network device, comprising:
a second transceiver module, configured to perform transmission of Ambient Internet of Things (A-IoT)-related information with an A-IoT management node through a first network interface;
wherein the first network interface is an interface between the A-IoT management node and the access network device.

28. A target node, comprising:
a third transceiver module, configured to perform transmission of Ambient Internet of Things (A-IoT)-related information with an A-IoT management node through a second network interface;
wherein the second network interface is an interface between the A-IoT management node and the target node, and the target node comprises an A-IoT server or a network exposure function.

29. An information transmission system, comprising a passive device, an access network device, an Ambient Internet of Things (A-IoT) management node, a target node, and a target network interface;
wherein the target network interface comprises at least one of a first network interface or a second network interface, the first network interface is an interface between the A-IoT management node and the access network device, and the second network interface is an interface between the A-IoT management node and the target node, and the target node comprises an A-IoT server or a network exposure function.

30. A communication device, comprising: a transceiver, a memory, a processor, and a computer program stored in the memory and executable on the processor;
wherein the processor is configured to read the program in the memory to implement the steps of the method according to any one of claims 1 to 16, or to implement the steps of the method according to any one of claims 17 to 22, or to implement the steps of the method according to any one of claims 23 to 25.

31. A computer-readable storage medium, configured to store a computer program, wherein the computer program, when executed by a processor, implements the steps of the method according to any one of claims 1 to 16; or implements the steps of the method according to any one of claims 17 to 22; or implements the steps of the method according to any one of claims 23 to 25.
